# EUROPEAN PATENT APPLICATION

(11) **EP 0 629 972 A2**
(43) Date of publication of application: **21.12.1994**
(21) Application number: 94301256.7
(22) Date of filing: 22.02.1994
(51) Int. Cl.: G06K 15/02, B41M 3/14

(54) **Method and apparatus for embedding identification codes in printed documents**

(30) Priority: 23.04.1993 US 52253
(71) Applicant: HEWLETT-PACKARD COMPANY, Palo Alto, California 94304-1181 (US)
(72) Inventor: Mahon, Michael J., San Jose, California 95125 (US); Huck, Jerome C., Palo Alto, California 94303 (US); Morris, Dale C., Menlo Park, California 94025 (US)
(74) Representative: Williams, John Francis

(57) **Abstract**

A method and apparatus (1203, 1403) for embedding identification information in documents. The present invention embeds information in each copy of a document (1207, 1407) such that a particular copy of the document is distinguishable from all other copies of the same document. Additionally, this embedded information (1209, 1301, 1409) is designed to remain intact even if the original is copied. A method and apparatus is also disclosed to embed verification information in a printed document (1207, 1407) such that modification to the text subsequent to printing is detectable.

## Description

This invention relates to printing documents and in particular to modifying the text printed to embed an identification code to identify the particular document.

Both governments and businesses have a need to identify particular copies of secure documents. For governments, the need often relates to the control of secret documents. It would be useful, for example, to be able to identify who "owned" the original document that was copied and given to a foreign agent. If the original owner of the original document is identified, then remedial steps can be undertaken to prevent the further release of classified documents.

For businesses, the need is similar. When faced with a copy of a confidential document, there is a business need to be able to identify the owner of the original. Once the original owner is identified the information leak can be traced and stopped. Today with the highly competitive markets many businesses face, a leak of important research and development information is extremely damaging.

Identifying documents is not new and the methods used have taken many forms. Some examples are, a stamp placed on the original, header or footer information printed with the original text or overprinting, in large type, a light halftone identification on each page, such as a serial number. These methods are effective but obtrusive and these methods alert those copying documents that the documents are marked. In some cases, it would be best not to advertise that a document is marked so that the copiers will not take measures to obscure the source of the copy.

A need also exists to be able to verify that a document has not been tampered with. With laser printers for example, it is possible to remove or add toner to a page and thereby modify the contents of the page. So the receiver of a document, or a copy of a document, needs a way to verify that the information contained in the document is genuine. This need also exists with other print technologies such as ink-jet and ribbon printers.

There exists therefore a need for a method and apparatus for embedding a hidden identification code in a document that allows the original document to be identified from a copy and to verify that the contents of the document have not been tampered with.

The present invention provides a method and apparatus that allows for the embedding of a number for any purpose in an original document such that the number can be identified either by examining the actual document or a copy of the original document. An additional embodiment also provides a method and apparatus for verifying that the contents of a document are unaltered.

In a first embodiment of the present invention, a document is given a unique identification code which is hidden on the page. This code is hidden by embedding the code in the document with slight variations in the text and layout of the text on the page. The variations in the text include varying the font slightly to encode the identifier by changing the serifs, widths and lengths of the characters.

In another embodiment of the present invention, "typographical errors" are introduced in the document. By selecting the location on the page and the type of typographical error introduced, a great amount of identification information is encoded on the page.

A third embodiment of the present invention modifies the formatting of the text in the document to embed identification information. The formatting is changed by varying the vertical spacing of the characters, lines and paragraphs on the page. Additional information is encoded by changing the horizontal spacing of the lines or characters on the page.

In a still another embodiment of the present invention, a verification code is embedded in the document. This code is examined to verify that the text on the page has not been altered. The verification code is generated based on the contents on the page and then embedded by the means described above.

These new and novel solutions to an old problem provide both government and industry with the means to reduce information leaks in a way that is both inexpensive and unobtrusive to implement.

In order that the invention shall be understood, exemplary embodiments will now be described with reference to the drawings, in which:

Figure 1 illustrates a normal capital "A" character implemented in a 9 by 14 grid pattern.

Figure 2 illustrates the character of Figure 1 modified to be shorter.

Figure 3 illustrates a capital "A" with a double cross line.

Figure 4 illustrates a capital "A" with bottom row extensions.

Figure 5 illustrates a capital "A" with four bottom row extensions.

Figure 6 illustrates a capital "A" with three bottom row extensions.

Figure 7 illustrates a capital "A" with three bottom row extensions distinct from that shown in Figure 6.

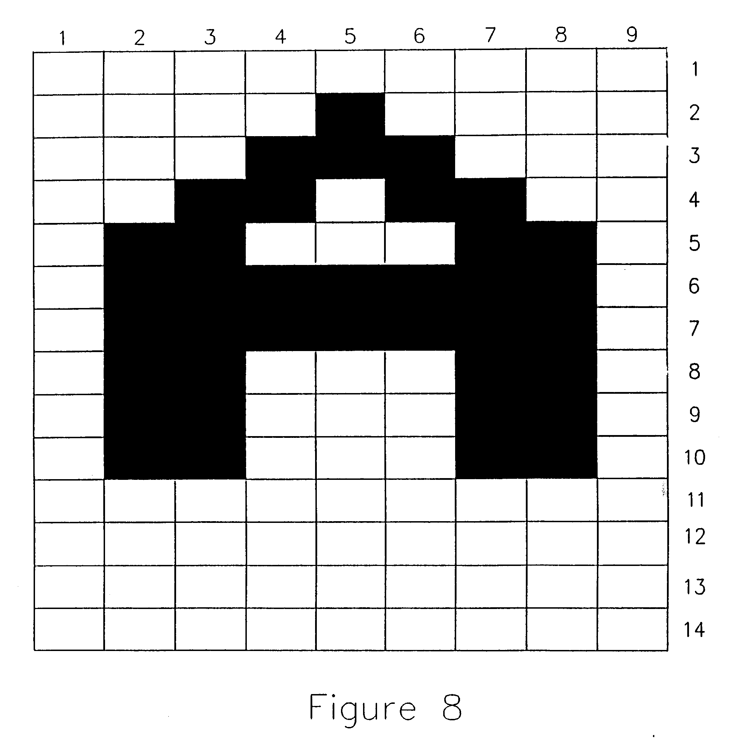

Figure 8 illustrates a combination character formed from the characters of Figures 2 and 3.

Figure 9 illustrates a line of a paragraph with an encoded character in position 1.

Figure 10 illustrates a line of a paragraph with an encoded character in position 2.

Figure 11 illustrates a line of a paragraph with the sixth character position magnified.

Figure 12 illustrates an apparatus for inserting a typographic error in a document.

Figure 13 illustrates three lines in a document shifted to encode information.

Figure 14 illustrates an apparatus for embedding hidden verification information in a document.

As discussed above, government and industry has a need to produce multiple copies of confidential documents for distribution to those needing the information. Each of the documents is an original containing the same textual information. With each additional copy produced, the risk of someone not authorized to possess a copy will in fact acquire a copy of the document increases and it is useful to be able to track who was originally given the document that leaked out. The present invention enables the multiple original copies to be tracked by the methods described below including text font variations.

When a document is formed with a word processor, a base font is selected and the design of the base font determines text character characteristics such as the size and shape of the character. Courier 10 and Times Roman are examples of base fonts.

Varying the text fonts used in a document can take many forms. The following example uses variations in a capital "A" to illustrate the present invention. However, it is understood that variations to any other character will effect the same beneficial result. Also while the character is implemented in a particular grid pattern, as a bit-mapped font, this invention is equally applicable to equation-based scalable fonts. The various changes in the character are used to encode information in the document and a number of the character changes are combined to increase the encoded information. For example, to uniquely identify four documents, each of the documents would contain a unique one of the character changes or would contain a character which combined two or more variations such as width and length. The following examples will more fully illustrate the invention.

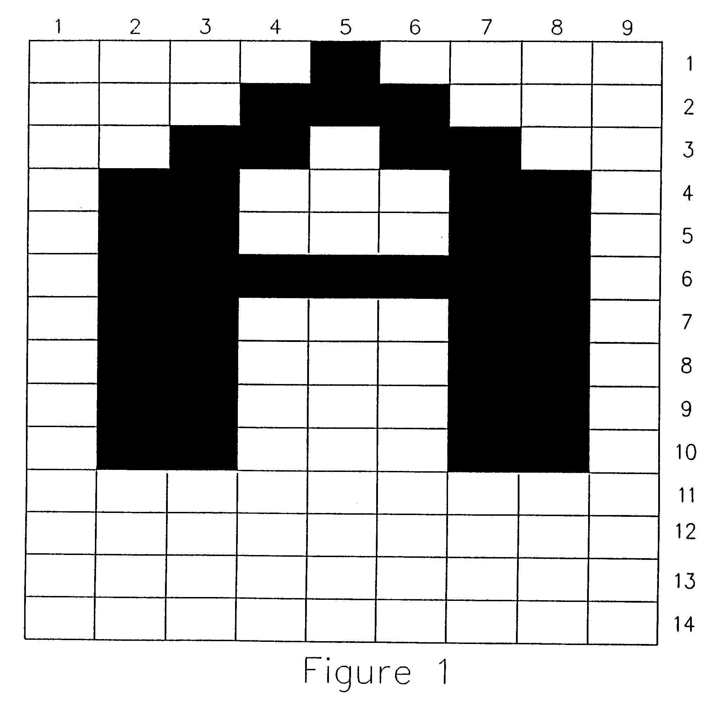

Figure 1 illustrates a capital "A" implemented in a 9 by 14 grid pattern. The character "A" 101 starts at column 5 and row 1, grid space (5,1), and continues down to row 10. This character and implementation is the reference to which the following implementations will be compared to.

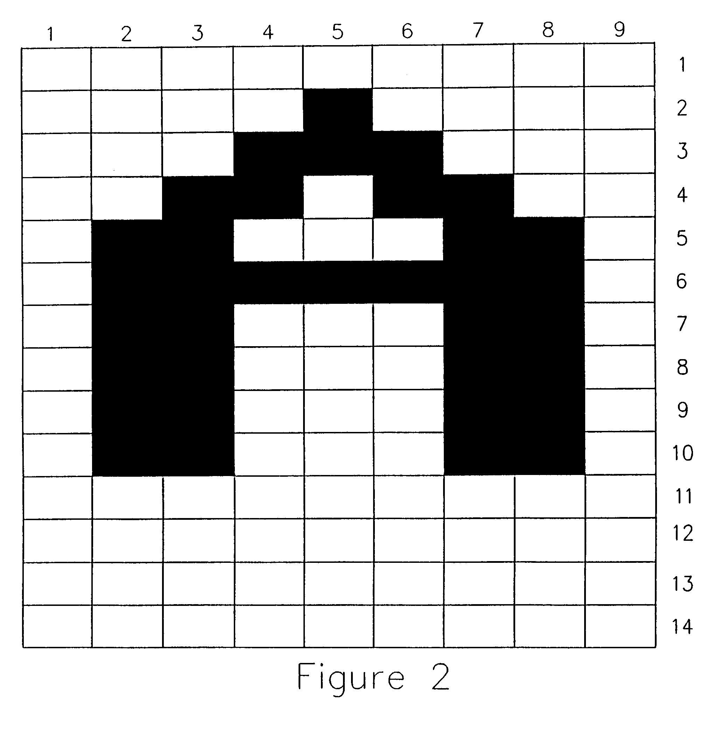

Figure 2 illustrates a variation in the capital "A" shown in Figure 1. The variation is manifested in the length of the "A" 201. This "A" begins at row 2 and continues down to row 10 and is therefore one row shorter than the "A" 101. This change equates to 1-bit of data.

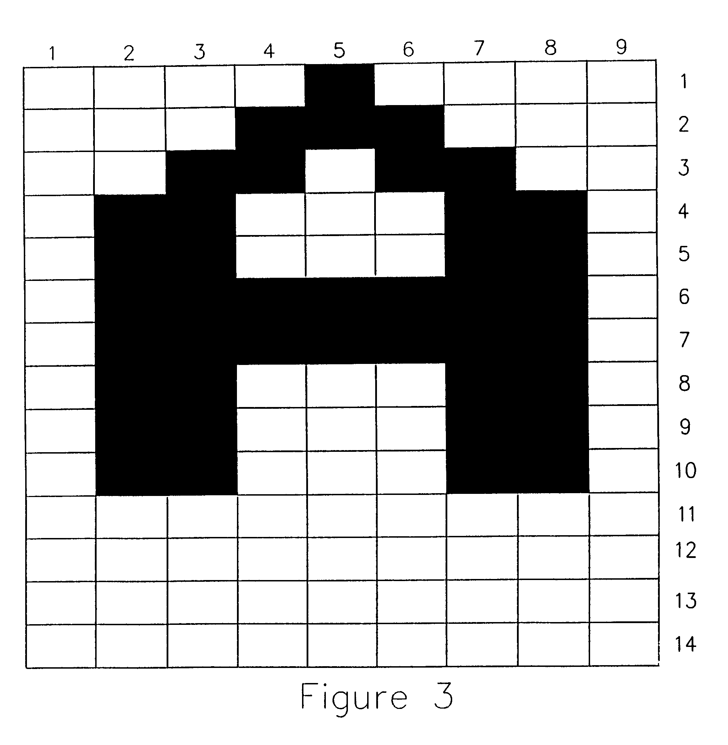

Figure 3 illustrates a variation in the cross line in the "A" 301 vs. the "A" 101. In the original "A" 101 the cross occurred at row 6. In the "A" 301, the cross occurs at row 6 and row 7 and makes the cross line appear thicker. This variation also encodes 1-bit of data.

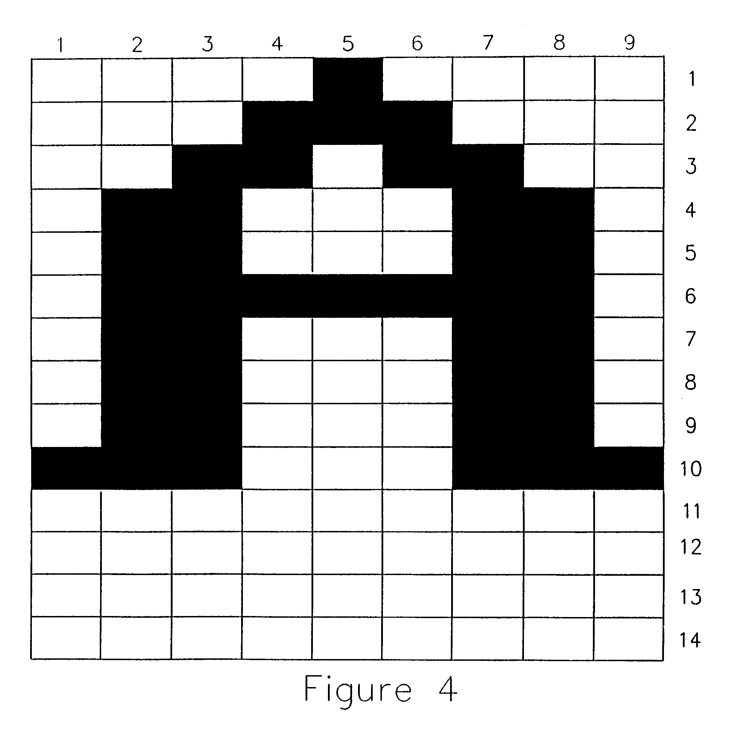

Figure 4 illustrates a bottom row variation in the "A" 401 vs. the "A" 101. In this example, the "A" 401 has two extensions on the bottom of the character. These extensions occur in grid spaces (1,10) and (9,10). These changes encode a single bit of data.

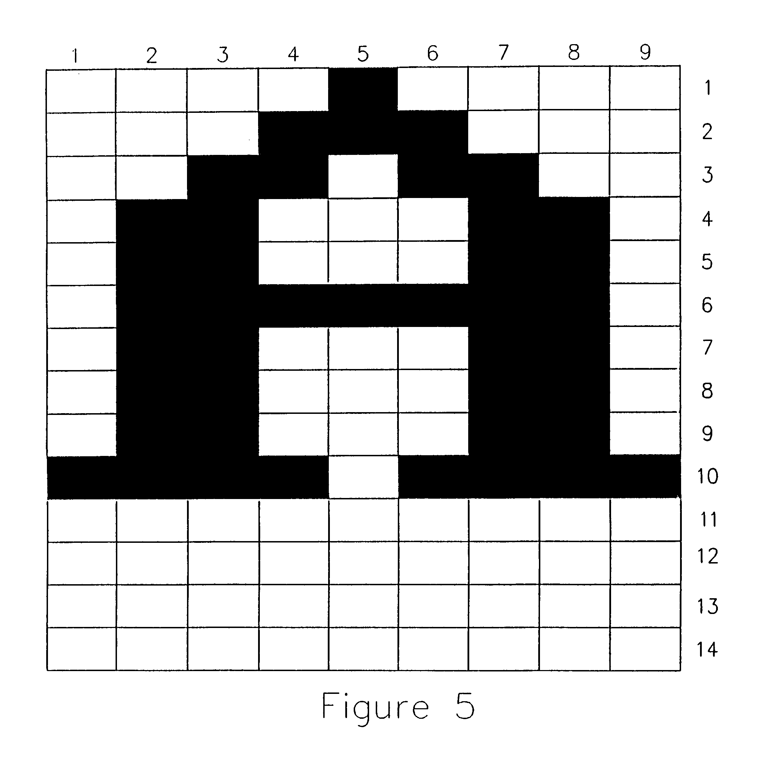

Figure 5 illustrates a further bottom row variation. Character 501 has four extensions on the bottom row relative to character 101. These extensions occur in grid spaces (1,10), (4,10), (6,10) and (9,10). These extensions encode a single bit of data.

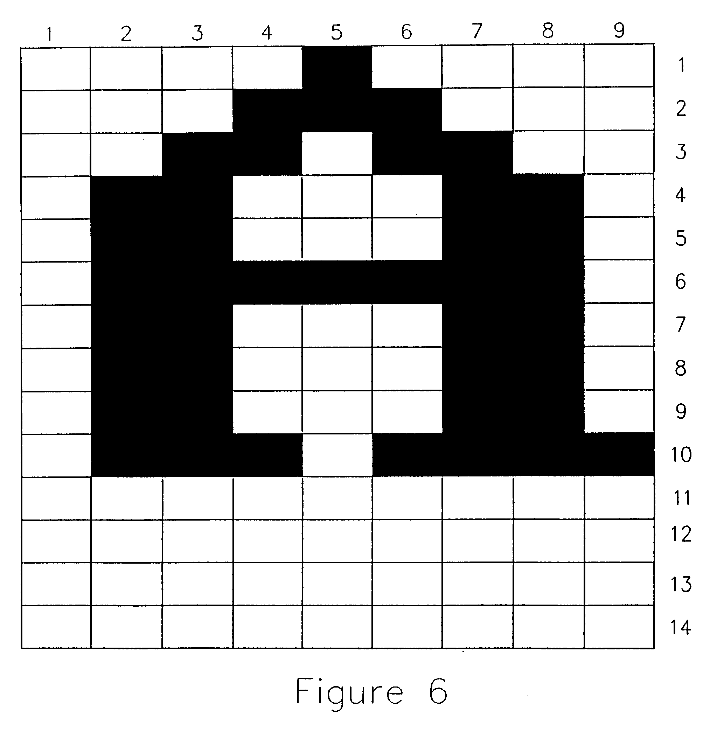

Figure 6 illustrates an additional bottom row variation. As shown, the character 601 has three bottom row extensions that occur in grid spaces (4,10), (6,10), and (9,10). This change relative to character 101 encodes a single bit of data.

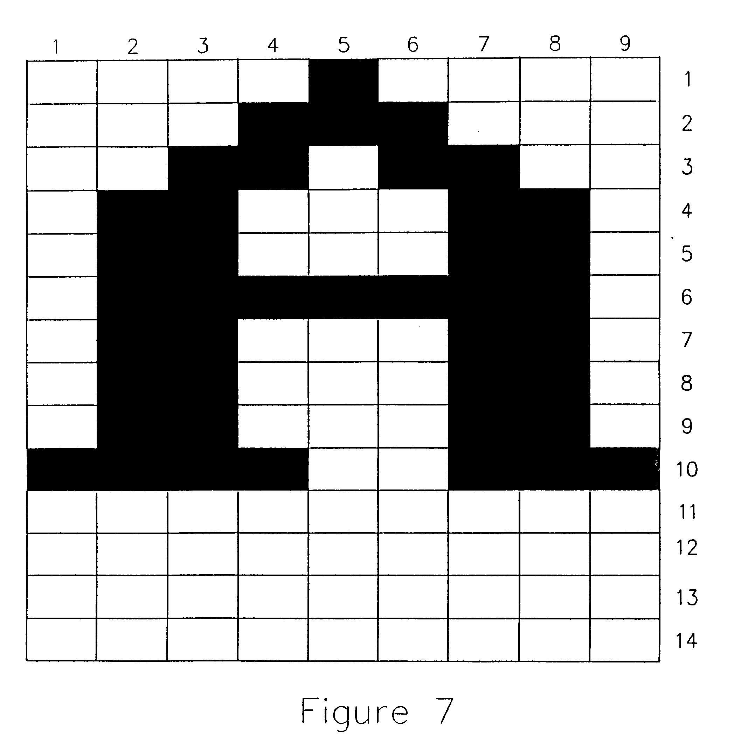

Figure 7 illustrates a capital "A" having three bottom row extensions different from that illustrated in Figure 6. Character 701 has extensions in grid spaces (1,10), (4,10) and (9,10). This change relative to character 101 also encodes a single bit of data.

The above examples Figures 1-7 can be used individually to uniquely identify seven different original documents. However they can also be combined. For example, to identify four original documents, character 101 is used in document 1, character 201 is used in document 2, character 301 is used in document 3 and character 801 combining the short character 201 with the double cross line of character 301 is used in document 4. This allows four documents to be identified with only three character variations. Of course other combinations of character variations are combinable to encode identification information.

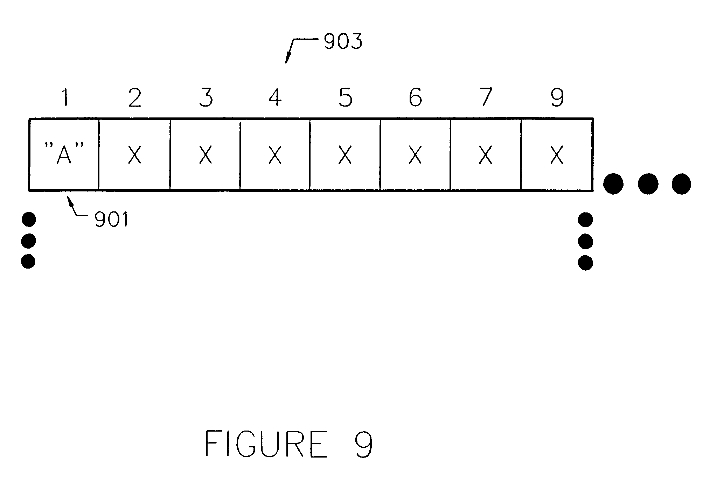

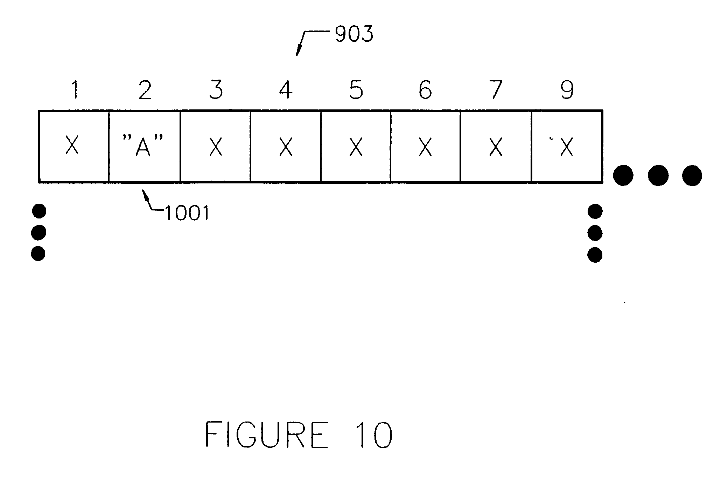

In addition to font variations, the position of the encoded character can be changed to thereby encode additional information as illustrated in Figures 9 and 10. For example, if the encoded character is the first character 901 in the first paragraph 903 of a document, then the same three font variations described above identify documents 1-4. If the encoded character is the second character 1001 in the first paragraph 903 of the document, then documents 5-7 are identifiable. In this second case, only three additional documents (5-7) are identifiable as an unmodified first and second character would be indistinguishable from the unmodified character 101 used to identify document 1. This method is extendable to other positions to identify virtually any number of documents. While Figures 9 and 10 illustrate a whole character positional change, first character to second character, micro-positional character changes will also encode identification.

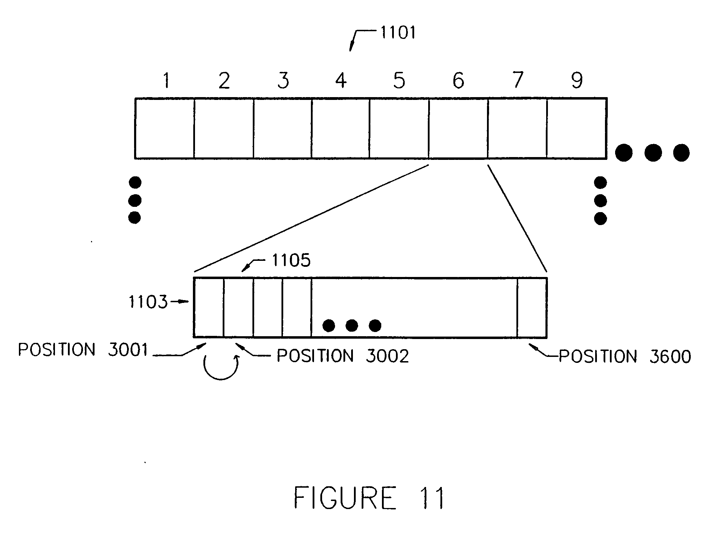

Given the advent of high resolution laser printers such as the 600 dots per inch (dpi) laserjet 4 printer manufactured by Hewlett-Packard Company, extremely fine micro-positional character changes can also be employed to embed identification information. For example, as shown in Figure 11, instead of the first character in the first paragraph 1101 starting 3001 dots (1103) in from the left margin (paragraph indent space of five characters * 600 dpi), the character position is adjusted to start at 3002 dots (1105) in from the left margin.

This change is not readily noticeable to the unaided eye but can be ascertained using measuring equipment. Additionally, since most photo copiers make copies that retain the relative spacing relationships of the original, although not the overall size, the identification of the original document that the copy was made from is ascertainable from the copy. This shifting of a character by one dot encodes one bit of information and is combinable with the font changes described above to provide for the identification of a plurality of documents. Of course, a character is shiftable by more than one dot space to encode additional information or to encode one bit of information in a coarser manner.

All the above examples detail methods of embedding identification information that is not readily noticeable to the casual reader of the document. However the discussed encoding methods will not exist in a copy retyped from the original document. To address this problem, the present invention provides for the insertion, in the original document, of a purposeful typographic mistake. If the original document is verbatim retyped, then the typographic mistake will exist in the copy which will allow the identification of the original document to be determined. The position of the mistake within the text can be combined with the typographic mistake to encode identification information as described above.

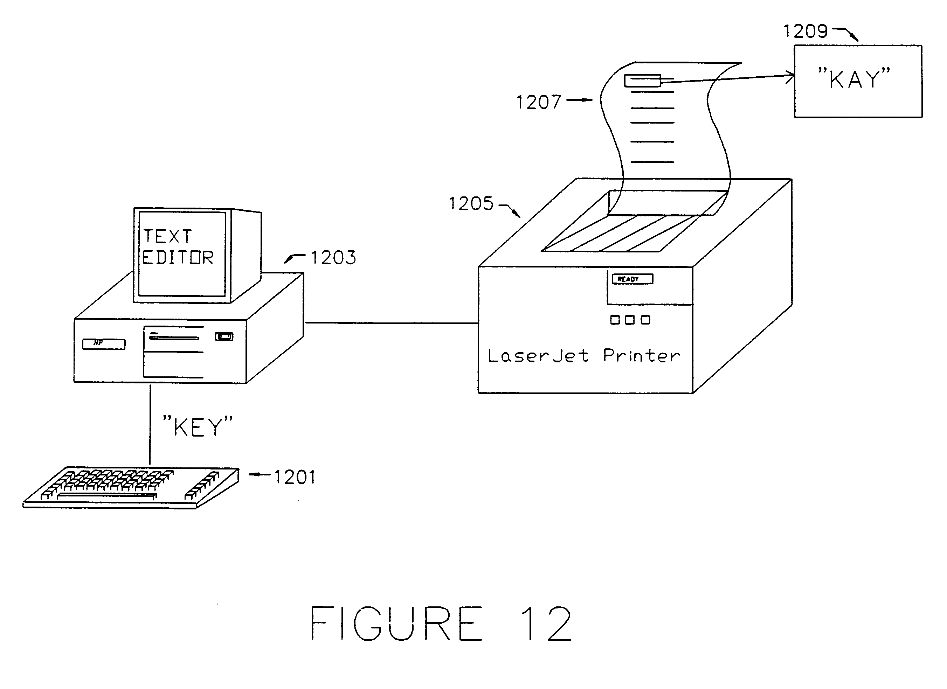

Figure 12 illustrates the typographic mistake embodiment. The user types the word "Key" on the keyboard 1201 and the information is sent to a computer 1203. Either the computer 1203 or the printer 1205 transforms the typed word "Key" to "Kay" which is printed on the paper 1207 as shown in the enlarged area 1209.

An additional embodiment of the present invention provides a method for embedding identification information in the vertical spacing in a document. In a document printed with a 600 dpi printer and printing 6 lines per vertical inch, each line of text plus the space between the lines uses 100 vertical dots (600 dots / 6 lines). A line of text typically uses about 66 vertical dots and the space between the lines uses approximately 34 vertical dots. By shifting the spacing of a line of text plus or minus one dot row, three documents can be uniquely identified. In addition, by shifting multiple text lines one vertical dot, considerable binary information can be encoded in the document. The line shifting is relative to a reference location on the media used or to a reference line or character.

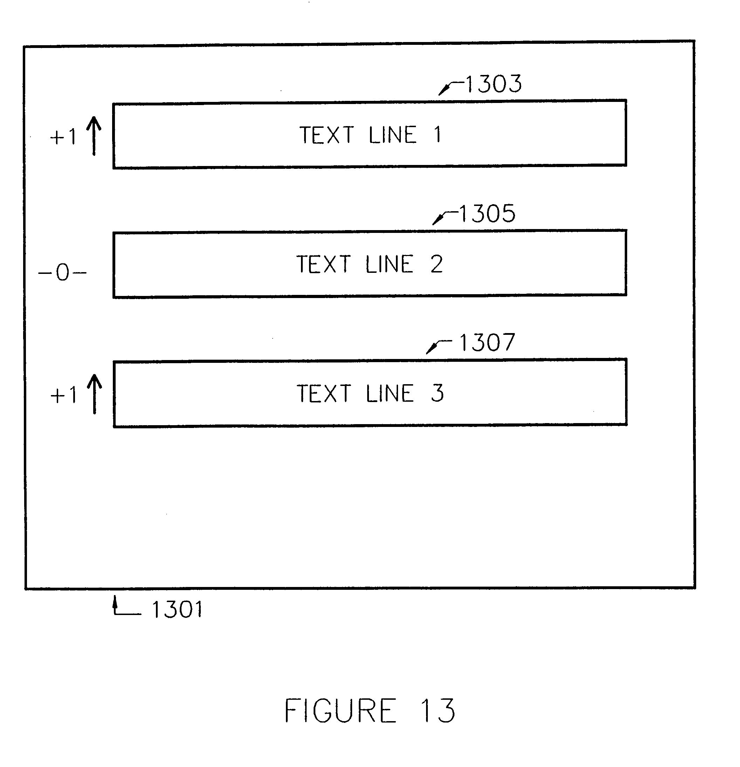

Figure 13 illustrates the vertical line shifting method where the shifting is relative to an absolute position on the media used or to another reference such as a line or character. Document 1301 contains three lines of text 1305-1307. The first line 1305 is shifted up one vertical dot row. Row two 1305 is not shifted from its nominal position and line three 1307 is shifted up by one vertical dot row. This positioning of the three text rows encodes the binary number "101" or 5 decimal and therefore identifies this document as document number 6 ("000" binary is document number 1). By varying which of the three lines are shifted, eight documents are uniquely identifiable. Additional lines are shiftable to increase the number of documents that are identifiable. Also, the vertical shifting of lines is combinable with the identification methods described above to provide an almost limitless amount of information that can be unobtrusively embedded in a document.

To verify that the contents of a document have not been altered a check code is embedded in the document. This check code is either a simple parity check or a complex error checking code both of which are well known in the data checking and correcting art and is computer based on the contents of the document. The check codes are produced either in the computer generating the text or in the printer printing the document.

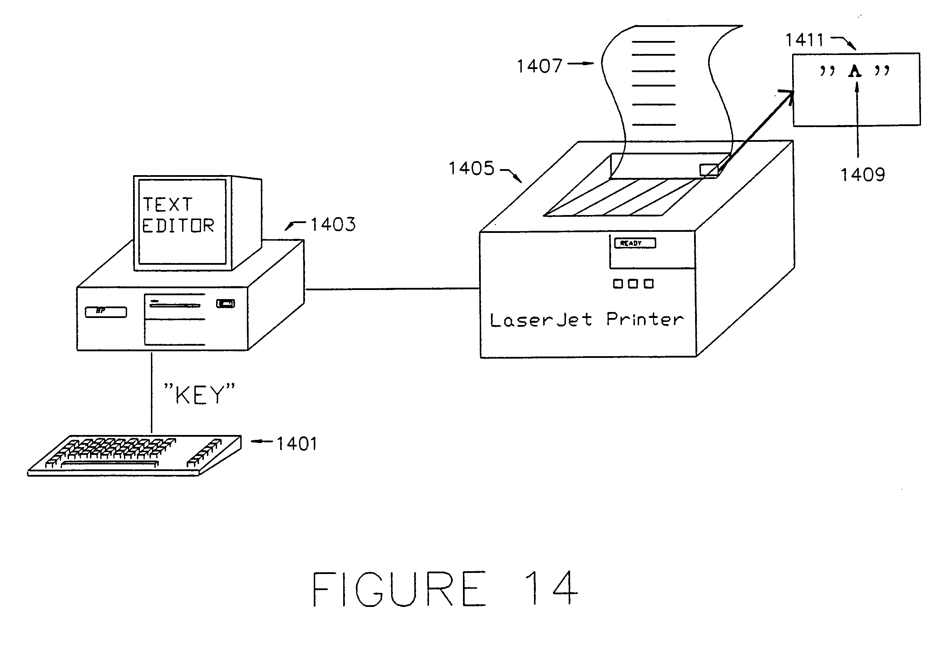

Figure 14 illustrates the verification process. A user enters a page of text using a keyboard 1401. This text is sent to a computer 1403 which is running a word processing or report generating program. The computer sends the page of text to a laser printer 1405 which prints the document 1407. Either the computer or the printer computes the parity for the page of text and encodes the parity with the text.

This encoding takes the form of modifying the font of the last character printed 1409 as shown in the magnified section 1411. To verify that the document has not been modified after printing, the parity of the text is computed and compared to the embedded information. A more complex check code can be encoded by any of the methods previously discussed such as shifting the text vertically to embed the check code number in the document. The last character was chosen as the character to be modified because all the other characters on the page have been determined by the time the last character is processed. Therefore a running parity or other check code can be conveniently designed such that the last step in the process is to modify the last character as it is sent to the printer or printed by the printer. Of course, all the text on a page can also be buffered and a parity or other check computed and used to modify the page of text before the page is printed. If page buffering is used, then the check code is distributable over the entire page and not just the last character.

While the above are examples of uses that an embedded number can be used, the techniques described can be used to embed a number in a document for any purpose. Also while the above examples use very small changes in the base font or line/character spacings to encode information, larger changes may be required due to the characteristics of the media used etc. So for example, instead of the base font being changed by a single dot, a coarser change to the font will aid the detection of the embedded code without departing from the spirit of this invention. Likewise, instead of the line/character spacing being changed by 1/600th of an inch, a coarser change is useful and will aid the detection of the embedded code. Also, for redundancy, a number can be embedded multiple times in the same document using the techniques described.

The above methods are implementable in either the user's computer or the printer that prints the document. If the computer is used, the word processing program or report generator is designed to encode the required information each time a document is printed. Alternatively, a separate program is run after the word processing is finished to format the text to be printed so that the required identification information is embedded.

If the printer is used to encode the identification information, the printer control language (PCL) is augmented with an instruction that causes the printer to encode the required information. Today, many large network printers utilize network user information already to sort the output from each of the users as appropriate. This network user identification can be used with the above methods to embed printer and user identification information in all printed documents.

Other embodiments of the invention will be apparent to the skilled in the art from a consideration of this specification or practice of the invention disclosed herein. It is intended that the specification and examples be considered as exemplary only, with the true scope and spirit of the invention indicated by the following claims.

## Claims

1. An apparatus for embedding a number in a document comprising:
a text generator having an output of text characters wherein the text characters utilise a base font (Fig.1); and
a code embedder which embeds a code by modifying (Figs. 2-8) the base font (Fig.1) of a text character.

2. An apparatus as in claim 1 wherein:
the code embedder embeds a code by modifying the base font (Fig.1) of a text character by changing the size (Fig 8,2) of the character.

3. An apparatus as in claim 1 wherein:
the code embedder embeds a code by modifying the base font (Fig.1) of a text character by changing the shape (Fig 2-8) of the character.

4. An apparatus as in claim 1 further comprising:
a printer (1205,1405) that prints the text characters including the text character having an embedded code.

5. An apparatus for embedding a number in a document comprising:
a text generator (1203) having an output of text characters; and a code embedder which embeds a code by changing one of the text characters (Fig 12 "key") into a different character (1209).

6. An apparatus as in claim 5 further comprising:
a printer (1205, 1405) which prints the text characters including the character4r (1209, 1411) having an embedded code.

7. An apparatus for embedding a number in a document comprising:
a text generator having an output of text characters and wherein the text characters form lines of text characters and the lines of text characters are space vertically apart and the text characters in a line are spaced horizontally apart; and
a code embedder which embeds a code by changing the spacing of a text character (901, 1001) relative to a reference.

8. An apparatus as in claim 7 wherein:
the code embedder embeds a code by changing the vertical spacing of a line (1303, 1307) of text characters relative to a reference.

9. An apparatus as in claim 7 wherein:
the code embedder embeds a code by changing the horizontal spacing of a text character (901, 1001, 1105) relative to a reference.

10. An apparatus as in claim 7 wherein:
the code embedder embeds a code by changing the vertical spacing of a text character (1303, 1307) relative to a reference.

11. An apparatus as in claim 7 further comprising:
a printer which prints the output of text characters and prints the text character having a changed spacing with the changed spacing.

12. An apparatus as in claim 7 further comprising:
a text verifier generating a check code determined by the output of text characters and;
the check code is embedded by the code embedder by changing the spacing of a text character (Fig.13) relative to a reference.

13. An apparatus as in claim 5 further comprising:
a text verifier generating a check code determined by the output of text characters and;
the check code is embedded by the code embedder by changing one of the text characters (Fig 12 'ker') into a different character (1209).

14. An apparatus as in claim 1 further comprising:
a text verifier generating a check code determined by the output of text characters and;
the check code is embedded by the code embedder by modifying the base font (Fig.1) of a text character (1409).
